(19) **Europäisches Patentamt / European Patent Office / Office européen des brevets**

(11) **EP 1 660 792 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **04762747.6**

(22) Anmeldetag: **02.09.2004**

(51) Int Cl.:
*F16J 9/06* *(2006.01)* *F16J 9/20* *(2006.01)*

(86) Internationale Anmeldenummer:
**PCT/DE2004/001961**

(87) Internationale Veröffentlichungsnummer:
**WO 2005/024276 (17.03.2005 Gazette 2005/11)**

(54) **ÖLABSTREIFRING FÜR KOLBEN VON VERBRENNUNGSMOTOREN**

OIL SCRAPER RING FOR PISTONS OF INTERNAL COMBUSTION ENGINES

SEGMENT RACLEUR D'HUILE DESTINE A DES PISTONS DE MOTEURS A COMBUSTION INTERNE

(84) Benannte Vertragsstaaten:
**DE ES FR GB IT SE**

(30) Priorität: **02.09.2003 DE 10340302**

(43) Veröffentlichungstag der Anmeldung:
**31.05.2006 Patentblatt 2006/22**

(73) Patentinhaber: **MAHLE GMBH**
**D-70376 Stuttgart (DE)**

(72) Erfinder: **FIEDLER, Rolf-Gerhard**
**73240 Wendlingen (DE)**

(74) Vertreter: **Pohle, Reinhard**
**Mahle GmbH**
**Patentabteilung ZRIP**
**Pragstrasse 26-46**
**70376 Stuttgart (DE)**

(56) Entgegenhaltungen:
**EP-A- 0 857 900** **EP-A- 1 089 026**
**DE-A- 1 425 456** **FR-A- 2 723 401**
**US-A- 5 193 820**

Printed by Jouve, 75001 PARIS (FR)

**Beschreibung**

Die Erfindung betrifft einen Ölabstreifring für Kolben von Verbrennungsmotoren mit einer aus Stahlband bestehenden mit parallelen Flanken versehenen Lamelle, deren Lauffläche eine ballig asymmetrische Form mit einer über den Umfang der Lamelle erstreckenden Scheitelpunktlinie aufweist, wobei eine in einer Ringnut des Kolbens angeordnete und eine kolbenbodenseitig abgewandte und kolbenbodenseitig zugewandte Federnutflanke aufweisende Spreizfeder die Lamelle radial gegen die Zylinderwand drückt.

Um zu verhindern, dass zuviel Motoröl in den Brennraum gelangt, was neben einem hohen Ölverbrauch auch negative Auswirkungen auf das Emissionsverhalten des Motors zur Folge hat, ist eine ausreichende Tangentialkraft der Ölabstreifringe zur Erzeugung einer radialen Anpressung an die Zylinderwand und damit einer guten Ölabstreifwirkung notwendig. Das bewirkt jedoch eine hohe Flächenpressung an den Laufflächen der Lamellen und damit auch eine hohe Reibleistung im Motorbetrieb. Diese Reibleistung verschlechtert den Wirkungsgrad des Verbrennungsmotors und erhöht demzufolge den Kraftstoffverbrauch. Die Auslegung der Tangentialkraft der Ölabstreifringe ist deshalb immer ein Kompromiss zwischen minimaler Reibleistung und maximaler Ölabstreifwirkung. Sämtliche Maßnahmen zur Verminderung der Reibleistung im motorischen Betrieb ohne Reduzierung der Tangentialkraft erleichtern somit die Auslegung der Ölabstreifringe bzw. verbessern den Wirkungsgrad des Motors.

Dementsprechend wurde für gattungsgemäße Ölabstreifringe neben einer speziellen Gestaltung der Spreizfeder versucht, die Laufflächen der Lamellen derart zu formen, dass diese den vorgenannten Forderungen gerecht werden.

Asymmetrische Laufflächen von Ölabstreifringen bzw. Kolbenringen sind aus der DE 38 33 322 A1, DE 43 00 531 C1 oder DE 44 29 649 C2 bekannt. FR 2 723 401 offenbart ebenso Ölabstreifringe mit asymmetrischen Laufflächen, die mittels einer Spreizfeder gegen eine Zylinderwand gedrückt werden, gemäß dem Oberbegriff des Anspruchs 1. Ebenso ist aus der DE 33 05 385 C1 ein Kolbenring bekannt, der in einer Ringnut eines Kolbens angeordnet ist, dessen Ringnut-Seitenwände vorzugsweise parallel, aber schräg zur Kolbenachse verlaufen, um eine verbesserte Abdichtung zu gewährleisten. Schräg verlaufende parallel zueinander ausgerichtete Ringnut-Seitenwände sind auch aus dem japanischen Gebrauchsmuster 57-73340 bekannt EP 1 089 026 und DE 1 425 456 offenbaren Ölabstreifringe, wobei Lamellen unter einem Winkel zur Kolbenachse in einer Spreizfeder gehalten werden. Diese vorgenannte Ausführungsformen sind jedoch auf Kompressionsringe bezogen, deren Anforderung hinsichtlich der Flächenpressung sehr niedrig ist, hingegen Ölabstreifringe hohe Flächenpressungen erfordern.

Es ist Aufgabe der Erfindung, einen mehrteiligen Ölabstreifring für einen Kolben eines Verbrennungsmotors anzugeben, der gegenüber dem bekannten Stand der Technik eine verbesserte Ölabstreifwirkung bei reduzierter Reibung und einem reduzierten Verschleiß der Lauffläche aufweist.

Gelöst wird die Aufgabe durch einen Ölabstreifring, bei dem mindestens eine der Federnutflanken unter einem Winkel β zur Kolbenachse nach radial außen bis zum zylinderseitigen Ende der Spreizfeder geneigt verläuft, wobei bevorzugt die kolbenbodenseitig abgewandte Federnutflanke vom Kolbenboden weg geneigt angeordnet ist. Die Lauffläche der Lamelle ist derart ausgebildet, dass sie einer verschleißnahen Endkontur im eingelaufenen Motorzustand entspricht, wobei im montierten Zustand des Ölrings im Kolben die Scheitelpunktlinie der Lauffläche zur kolbenbodenseitig abgewandten Ringnutflanke hin angeordnet ist.

Die Lauffläche der Lamelle zeichnet sich durch eine asymmetrische Neigung mit einer gegenüber dem Stand der Technik stark reduzierten Balligkeit aus, wobei die Laufflächenkontur näherungsweise durch ein Polynom 2. Ordnung beschrieben werden kann.

In einem weiteren Ausführungsbeispiel der Erfindung ist eine einteilige Spreizfeder vorgesehen, die zwei Federnuten aufweist und in der Ringnut 7 angeordnet ist. Die Federnuten sind derart ausgeführt, dass die kolbenbodenseitig abgewandte Federnutflanke einen Winkel β einnimmt, der einen Wert gemäß der Anordnung nach Anspruch 1 annimmt.

Durch die erfindungsgemäße Laufflächengestaltung und der Anordnung der Lamelle in der erfindungsgemäß gestalteten Spreizfeder wird in Abhängigkeit von der Hubbewegung des Kolbens durch günstigere hydrodynamische Bedingungen eine Verminderung der Reibleistung des gesamten Ölabstreifrings ohne eine Reduzierung der Tangentialkraft erreicht, wobei die ölabstreifende Funktion mit dem Wechsel der Hubbewegung des Kolbens in vollem Umfang erhalten bleibt. Die Reduzierung der Reibleistung bewirkt eine Verbesserung des Wirkungsgrades des Motors oder es kann durch eine Erhöhung der Tangentialkraft bei unverändertem Reibleistungsniveau das Ölabstreifverhalten verbessert werden. Außerdem ist eine Verringerung der axialen Höhe des gesamten Ringpaketes im Vergleich zu Ringpaketen nach dem Stand der Technik realisierbar.

Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen

Fig. 1    einen Querschnitt des erfindungsgemäßen Ölabstreifringes in einer ersten Ausführung; und

Fig. 2    einen Querschnitt der erfindungsgemäßen Ölabstreifringes in einer zweiten Ausführung.

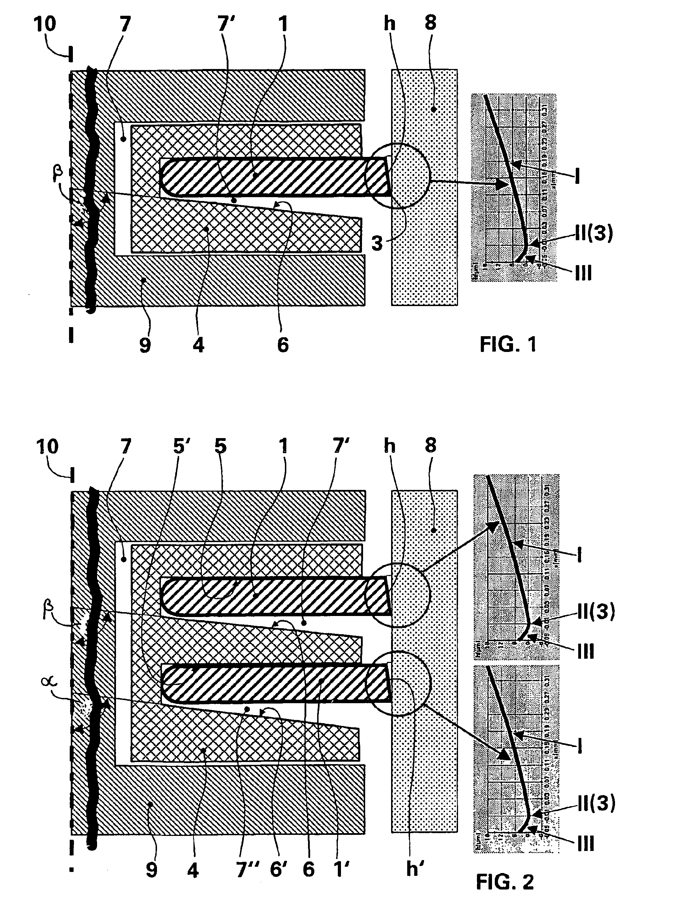

Wie aus Fig. 1 ersichtlich, besteht ein Ölabstreifring aus einer Lamelle 1 und einer Spreizfeder 4, welche die Lamelle radial gegen eine Zylinderwand 8 drückt. Die Spreizfeder 4 ist in eine Ringnut 7, die 90° Grad zur Kolbenachse 10 ausgerichtete Ringnutflanken aufweist, eingesetzt und besitzt eine äußere Form und Größe, die der Ringnut entspricht. Die Spreizfeder weist eine Federnut 7' mit Federnutflanke 5 auf, welche die kolbenbodenseitig zugewandte Seite darstellt und eine Federnutflanke 6 auf, welche die dem Kolbenboden abgewandte Seite darstellt. Erfindungsgemäß ist die kolbenbodenseitig zugewandte Federnutflanke 5 in einem Winkel von 90° zur Kolbenachse 10 ausgerichtet angeordnet, wobei die dem Kolbenboden abgewandte Federnutflanke 6 unter einem Winkel β vom Kolbenboden weg geneigt bis zum Federaußenumfang verläuft. Bevorzugt beträgt der Winkel β 85° bis 87° Winkelgrad.

Erfindungsgemäß weist die Lamelle 1 eine ballig asymmetrisch geformte Lauffläche h mit einer über den Umfang der Lamelle erstreckenden Scheitelpunktlinie 3 auf, wobei die Scheitellinie 3 als in Kontakt zur Zylinderwand 8 stehende Kante zum Ölabstreifen wirkt. Nach Fig. 1 ist die Lamelle 1 in ihrem montierten Zustand im Kolben derart angeordnet, dass ihre Scheitelpunktlinie 3 (Kante) zur kolbenbodenseitig abgewandten Federnutflanke 6 ausgerichtet ist.

Erfindungsgemäß hat die Lauffläche h der Lamelle eine Form, die einem Einlaufvorgang von mehreren hundert Stunden im Motorbetrieb entspricht. Diese ist dadurch charakterisiert, dass die Lauffläche h der Lamelle 1 im Querschnitt in einem ersten Abschnitt (I) der asymmetrischen Form einem Polynom 2. Ordnung mit h $(x) = ax + bx^2$ folgt, wobei x= Laufflächenkoordinate im kartesischen Koordinatensystem in mm ist und a, b Koeffizienten, mit a definiert durch das Verhältnis des axialen Flankenspiels der Lamelle zur Breite der Lamelle; b definiert als Betrag der Laufflächenkrümmung; einem als Kante ausgeführten tragenden Scheitel (II) h(x=0), und in einem dritten Abschnitt (III) der asymmetrischen Form der Funktion $h(x) = cx^2$, mit c als einem Vielfachen von b, folgt. Als Beispiel für eine Lamelle mit einer Dicke von 0,4 mm ergibt sich ein Wert $h(x) = 35x + 50x^2$. Damit sind die entsprechend Fig. 1 und 2 dargestellten Querschnittskurven mit x als Laufflächenkoordinate in mm und h(x) als Balligkeit in μm erzielbar. Es ist verständlich, dass die Koeffizienten dieses Polynoms auf die spezifische Anwendung abzustimmen sind, wobei wesentliche Parameter hierbei der Zylinderdurchmesser, die Abmessungen des Lamellenquerschnittes und die axialen Spielverhältnisse des eingebauten Ölabstreifringes in der Ringnut sind. Die typische Balligkeit der Lauffläche h nach der Erfindung beträgt ca. 2 bis 10 μm/0,4 mm gegenüber den Ausführungen nach dem Stand der Technik von 3 bis 15 μm/0,15 mm.

Nach einem weiteren Ausführungsbeispiel gemäß Fig. 2 weist die Spreizfeder 4 eine axial unterhalb einer ersten Federnut 7' eine zweite Federnut 7" auf, deren kolbenbodenseitige Federnutflanken 5 und 5' parallel zur Kolbenquerachse 10 verlaufen.

Die zum Kolbenboden abgewandte Federnutflanke 6 und 6' verläuft nach radial außen bis zur Federaußenwand unter einem Winkel von 3 bis 5 Grad geneigt. In diesem Ausführungsbeispiel sind beide Scheitelpunktlinien 3, 3' (Kanten) der Laufflächen h und h' von der kolbenbodenseitigen Ringnutflanke 5 weg weisend angeordnet.

Funktionell ist die erfindungsgemäß verbesserte Ölabstreifwirkung dadurch gegeben, dass die an der Lauffläche h der Lamelle in Zylinderachsrichtung angreifende Reibkraft ein Drehmoment erzeugt, welches die Lamelle tellerförmig verwölbt. Dies ist möglich, weil die Gestaltung der V-förmigen Ringnut 7 eine Bewegung der Lamelle in axialer Richtung vor allem an der inneren Auflage behindert, wohingegen an der äußeren Auflage deutlich größere axiale Bewegungsamplituden möglich sind. Die Reibkraft und damit das Drehmoment wechselt abhängig von der Hubrichtung des Kolbens das Vorzeichen. Da die Höhe der Reibkraft noch geschwindigkeitsabhängig ist, hat dies ständige Änderungen der tellerförmigen Verwölbung zur Folge, bezeichnet als dynamisches Twisten. Durch das dynamische Twisten erzeugt die Lamelle, die bei der Hubbewegung weg vom Verbrennungsraum - dem Abwärtshuban einer der kolbenbodenseitig zugewandten Federnutflanke anliegt, in Kombination mit der asymmetrischen Neigung der Lauffläche eine gute Ölabstreifwirkung - "Kante" trägt -, während die jeweils andere Lage der Lamelle aufgrund der definierten Balligkeit der Lauffläche eine verbesserte Hydrodynamik beim Aufwärtshub aufweist -"Fläche" (Abschnitt I) trägt. Dadurch reduziert sich die Reibleistung an der Lamelle, welche in vertwistetem Zustand eine schlechtere Ölabstreifwirkung aufweist. Eine Änderung der Hubrichtung bewirkt ein Umklappen der Lamelle in die jeweils andere Lage.

Die lagerichtige Orientierung der Lamelle beim Einbau des Ölabstreifringes in den Zylinder des Motors muss beachtet werden, die beispielsweise durch eine Farbmarkierung einer der Lamellenflanken gewährleistet werden kann.

Die Herstellung der Laufflächenform- bzw. Kontur kann beispielsweise durch Läppen erfolgen.

Bezugszeichen

| 1, 1' | Lamelle, Ölabstreifring |
|---|---|
| 3, 3' | Scheitelpunktlinie (Kante) |
| 4 | Spreizfeder |
| 5, 5' | kolbenbodenseitig zugewandte Federnutflanke |
| 6, 6' | kolbenbodenseitig abgewandte Federnutflanke |
| 7 | Ringnut |
| 7' | erste Federnut |
| 7" | zweite Federnut |
| 8 | Zylinderwand |
| 9 | Kolben |
| 10 | Kolbenquerachse |
| h, h' | Laufflächen |

**Patentansprüche**

1. Ölabstreifring für Kolben von Verbrennungsmotoren mit einer aus Stahlband bestehenden Lamelle (1) mit parallelen Flanken, deren Lauffläche (h) eine ballig asymmetrische Form mit einer über den Umfang der Lamelle erstreckenden Scheitelpunktlinie (3) aufweist, wobei eine in einer Ringnut (7) des Kolbens anordenbare und eine im montierten Zustand kolbenbodenseitig abgewandte (6) und kolbenbodenseitig zugewandte Federnutflanke (5) aufweisende Spreizfeder (4) die Lamelle (1) radial gegen die Zylinderwand (8) drückt,
   **dadurch gekennzeichnet,**
   **dass** mindestens eine der Federnutflanken (5, 6) unter einem Winkel zur Kolbenachse (10) nach radial außen bis zum zylinderseitig weisenden Ende der Spreizfeder (4) geneigt verläuft,
   **dass** die Lauffläche (h) der Lamelle (1) derart ausgebildet ist, dass sie einer verschleißnahen Endkontur im eingelaufenen Motorzustand entspricht, und
   **dass** im montierten Zustand des Ölrings (10) im Kolben die Scheitelpunktlinie (3) der Lauffläche (h) zur kolbenbodenseitig abgewandten Ringnutflanke (6) hin angeordnet ist.

2. Ölabstreifring nach Anspruch 1, **dadurch gekennzeichnet, dass** die Lauffläche (h) der Lamelle (1) im Querschnitt

   - in einem ersten Abschnitt (I) der asymmetrischen Form einem Polynom 2. Ordnung mit h (x)= ax + bx$^2$ folgt, wobei
   x= Laufflächenkoordinate im kartesischen Koordinatensystem in mm ist und a, b Koeffizienten, mit a definiert durch das Verhältnis des axialen Flankenspiels der Lamellen zur Breite der Lamellen; b definiert als Betrag der Laufflächenkrümmung;
   - einem als Kante ausgeführten tragenden Scheitel (II) h(x=0), und
   - in einem dritten Abschnitt (III) der asymmetrischen Form der Funktion h(x)= cx$^2$, mit c als einem Vielfachen von b, folgt.

3. Ölabstreifring nach Anspruch 1 und 2, **dadurch gekennzeichnet, dass** die im montierten Zustand kolbenbodenseitig abgewandte Federnutflanke (6) unter einem Winkel (β) vom Kolbenboden weg geneigt verläuft.

4. Ölabstreifring nach Anspruch 1 und 2, **dadurch gekennzeichnet, dass** die Spreizfeder einteilig ausgeführt ist und zwei Federnuten (7, 7') aufweist, die derart ausgeführt sind, dass der Winkel (α, β) einen Wert gemäß Anordnung nach Anspruch 1 annimmt.

5. Ölabstreifring nach Anspruch 1, **dadurch gekenn-**

**zeichnet, dass** der Winkel (β) einen Wert von 85° bis 87° Winkelgrad umfasst.

**Claims**

1. Oil scraper ring for pistons of internal-combustion engines with a disc (1) consisting of a steel band and having parallel sides, the bearing surface (h) of said disc (1) has an asymmetrically crowned shape with a vertex line (3) extending over the circumference of the disc, a bracing spring (4) which may be positioned in an annular groove (7) in the piston and has a facing spring groove side (5) on the piston head-side and a remote spring groove side (6) on the piston head-side in the assembled condition pressing the disc (1) radially against the cylinder wall (8), **characterised in that** at least one of the spring groove sides (5, 6) extends inclined radially outwards up to the end, oriented on the cylinder side, of the bracing spring (4) at an angle to the piston axis (10), that the bearing surface (h) of the disc (1) is configured such that it corresponds to an almost worn end contour in the run-in engine state, and that when the oil ring (10) is assembled in the piston, the vertex line (3) of the bearing surface (h) is positioned towards the remote annular groove side (6) on the piston head-side.

2. Oil scraper ring according to claim 1, **characterised in that** in cross-section, the bearing surface (h) of the disc (1) follows in a first portion (I) the asymmetrical shape of a polynomial of the second order where h(x) = ax + bx$^2$, wherein x represents the bearing surface coordinate in the cartesian coordinate system in mm and a and b are coefficients where a is defined by the ratio of the axial side clearance of the discs to the width of the discs; b is defined as the value of the bearing surface curvature; and follows a supporting vertex (II) h(x=0) configured as an edge, and in a third portion (III) follows the asymmetrical shape of the function h(x) = cx$^2$, where c is a multiple of b.

3. Oil scraper ring according to claim 1 and claim 2, **characterised in that** the spring groove side (6) which is remote on the piston head-side when assembled is inclined at an angle (β) away from the piston head.

4. Oil scraper ring according to claim 1 and claim 2, **characterised in that** the bracing spring is formed in one piece and has two spring grooves (7, 7') which are configured so that the angle (α, β) assumes a value according to the arrangement of claim 1.

5. Oil scraper ring according to claim 1, **characterised in that** the angle (β) embraces a value of 85 to 87 angular degrees.

**Revendications**

1. Segment racleur d'huile pour des pistons de moteurs à combustion interne comprenant une lamelle (1) à flancs parallèles constituée d'un ruban d'acier, dont la surface de fonctionnement (h) présente une forme bombée asymétrique avec une ligne de sommet (3) s'étendant sur le pourtour de la lamelle, un ressort d'écartement (4) pouvant être disposé dans une gorge de segment (7) du piston et présentant un flanc de gorge de ressort (6) détourné du côté fond de piston et un flanc de gorge de ressort (5) tourné du côté fond de piston à l'état monté, pressant la lamelle (1) radialement contre la paroi de cylindre (8), **caractérisé en ce**

   **qu'**au moins l'un des flancs de gorge de ressort (5, 6) s'étend de manière inclinée radialement vers l'extérieur jusqu'à l'extrémité du ressort d'écartement (4) orientée du côté cylindre en formant un angle par rapport à l'axe de piston (10),
   **que** la surface de fonctionnement (h) de la lamelle (1) est réalisée de telle façon qu'elle corresponde à un contour d'extrémité proche de l'usure à l'état rodé du moteur, et
   **qu'**à l'état monté du segment racleur d'huile (10) dans le piston, la ligne de sommet (3) de la surface de fonctionnement (h) est disposée en direction du flanc de gorge de ressort (6) détournée du côté fond de piston.

2. Segment racleur d'huile selon la revendication 1, **caractérisé en ce que** la surface de fonctionnement (h) de la lamelle (1) en coupe transversale
   suit dans une première section (I) de forme asymétrique un polynôme du second degré avec

$$h(x) = ax + bx^2,$$

   x étant égal aux coordonnées de la surface de contact dans un système de coordonnées cartésien en mm et a, b étant des coefficients, a étant défini par le rapport du jeu de flanc axial de la lamelle à la largeur de la lamelle ; b étant défini comme le montant de la courbure de la surface de fonctionnement ; d'un sommet porteur (II) h(x=0) réalisé sous forme d'arête,
   et suit dans une troisième section (III) de forme asymétrique la fonction $h(x) = cx^2$, c étant un multiple de b.

3. Segment racleur d'huile selon la revendication 1 et 2, **caractérisé en ce que** le flanc de gorge de ressort (6) détourné du côté fond de piston à l'état monté s'étend de manière inclinée en éloignement du fond de piston selon un angle (β).

4. Segment racleur d'huile selon la revendication 1 et 2, **caractérisé en ce que** le ressort d'écartement est réalisé d'une seule pièce et présente deux gorges de ressort (7, 7'), qui sont réalisées de telle façon que l'angle (α, β) adopte une valeur conforme à l'agencement suivant la revendication 1.

5. Segment racleur d'huile selon la revendication 1, **caractérisé en ce que** l'angle (β) comprend une valeur de 85 à 87 degrés d'angle.

FIG. 1

FIG. 2